# EUROPEAN PATENT APPLICATION

(11) **EP 3 337 133 A1**
(43) Date of publication of application: **20.06.2018**
(21) Application number: 16306725.9
(22) Date of filing: 19.12.2016
(51) Int. Cl.: H04L 29/08, H04W 4/00, H04W 84/18, H04W 88/18

(54) **A DEVICE AND METHOD FOR REMOTELY CONTROLLING A LOW RANGE WIRELESS DEVICE**

(71) Applicant: Thomson Licensing, 92130 Issy-les-Moulineaux (FR)
(72) Inventor: JACOPS, Davy, 2650 Edegem (BE)
(74) Representative: Coda, Sandrine

(57) **Abstract**

Bluetooth is a wireless technology standard for exchanging data over short distances. The effective range of a Bluetooth device varies due to propagation conditions, material coverage, production sample variations, antenna configurations and battery conditions. Thus, the usual range of a Bluetooth device is about ten or so meters. According to an embodiment of the invention it is possible to remotely control a low range wireless device. When the low range wireless devices and a user equipment are out of range of each other, but the low range wireless devices are within range of an network equipment, the user equipment may remotely control the low range wireless devices by sending a control message to the low range wireless devices through an network equipment acting a s a proxy for the user equipment.

## Description

### TECHNICAL FIELD

The present invention relates to solutions for remotely controlling low range wireless devices, such as Bluetooth devices.

### BACKGROUND

Bluetooth is a wireless technology standard for exchanging data over short distances. Bluetooth is primarily designed for low-power consumption transceiver microchips in each device. Bluetooth devices use a radio communications system and communicate directly with each other defining an *ad hoc* network.

Bluetooth is implemented in many products, such as telephones, tablets, media players, robotics systems, sensors, laptops and console gaming equipment, and some high end headsets, modems, and watches. Bluetooth is useful when transferring information between two or more devices that are near each other in low-bandwidth situations.

The effective range of a Bluetooth device varies due to propagation conditions, material coverage, production sample variations, antenna configurations and battery conditions. Thus, the usual range of a Bluetooth device is about ten or so meters. This is one of the drawbacks of Bluetooth.

The present invention has been devised with the foregoing in mind.

### SUMMARY OF INVENTION

According to a first aspect of the invention there is provided a computer implemented method for controlling a low range wireless device by means of a user equipment, said method being executed by the user equipment and comprising:
- determining the low range wireless device is out of range of the user equipment,
- transmitting a control message intended for the low range wireless device to a network equipment, within the range of which the low range wireless device is located, said network equipment being configured to transmit said controlling message to the low range wireless device.

Such a solution enables to remotely control a low range wireless device, like low energy devices, home automation devices or sensors, etc.

Usually, that is to say when the low range wireless devices and the user equipment are within range of each other, the low range wireless devices are directly controlled by the user equipment, like a smartphone, as both the low range wireless devices and the user equipment belong to the same ad hoc network.

When the low range wireless devices and the user equipment are out of range of each other, but the low range wireless devices are within range of a network equipment, the user equipment may remotely control the low range wireless devices by sending a control message to the low range wireless devices through a network equipment acting a s a proxy for the user equipment, when the low range devices are within range of the network equipment.

Such a solution enables to increase the range of ad hoc networks, such as Bluetooth networks.

According to an embodiment of the invention, the method further comprises, prior to transmitting the control message, retrieving an identifier of the network equipment stored in a memory of said user equipment.

This implementation is convenient when the network equipment is a home gateway. The user of the user equipment, and owner of the home gateway, may store an identifier of the home gateway, such as a host name, in a non-volatile memory of the user equipment. The host name is then translated via a DNS (*Domain Name System*) server into a public IP address. The user equipment knows the host name and requests translation if this host name into a public IP address.

According to an embodiment of the invention, the method further comprises, prior to transmitting the control message, receiving, in answer to a request, a message comprising an identifier of the network equipment, said message being transmitted by a remote server.

This implementation is convenient when the network equipment is a hot-spot. The user equipment sends requests to a remote server in order to retrieve an identifier, such as its public IP address, of a given network equipment.

Another object of the invention is a user equipment capable of controlling a low range wireless device, said user equipment comprising a processor configured to:
- determine the low range wireless device is out of range of the user equipment,
- transmit a control message intended for the low range wireless device to a network equipment, within the range of which the low range wireless device is located, said network equipment being configured to transmit said controlling message to the low range wireless device.

Such a user equipment is for example a smartphone which may sends messages to a network equipment through a radio network like a 4G network. Those messages are then transferred by the network equipment to the low range wireless device to be controlled.

According to an embodiment of the invention, prior to transmitting the control message, the processor is configured to retrieve an identifier of the network equipment stored in a memory of said user equipment.

According to an embodiment of the invention, prior to transmitting the control message, the processor is configured to receive, in answer to a request, a message comprising an identifier of the network equipment, said message being transmitted by a remote server.

Another object of the invention concerns a network equipment capable of controlling a low range wireless device located within range of said network equipment, said network equipment comprising a processor configured to:
- receive a control message transmitted by a user equipment which is out of range of the low range wireless device,
- transmit said control message to the low range wireless device.

Such a network equipment is for example a home gateway or a hot spot.

Another object of the invention concerns a system for controlling at least one low range wireless device, said system comprising:
- a user equipment capable of controlling said low range wireless device,
- a network equipment within the range of which the low range wireless device is located,
wherein:
- the user equipment:
   - determines the low range wireless device is out of its range,
   - transmits a control message intended for the low range wireless device to said network equipment, and
- the network equipment:
   - receives said control message transmitted by said user equipment,
   - transmits said control message to the low range wireless device.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** represents a system in which an embodiment of the invention is implemented;
**Figure 2** a schematic block diagram illustrating an example of the user equipment according to an embodiment of the invention,
**Figure 3** a schematic block diagram illustrating an example of the user equipment according to an embodiment of the invention,
**Figure 4** is a flow chart for explaining a process for remotely controlling a low range wireless device according to an embodiment of the invention.

### DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

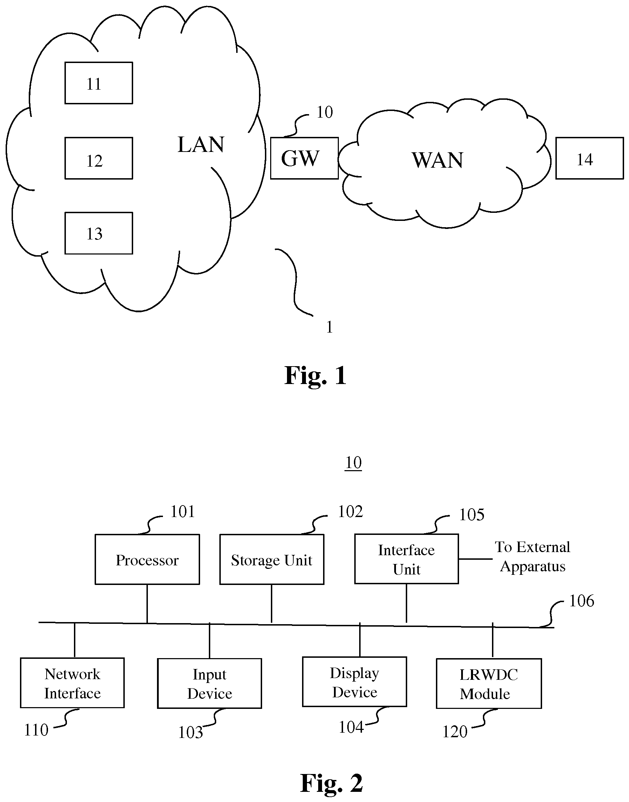

**Figure 1** represents a system 1 in which an embodiment of the invention may be implemented. The system 1 comprises a network equipment such as a home gateway 10 interconnecting a LAN (Local Area Network) and a WAN 20 (Wide Area Network), such as the Internet.

The LAN comprises a plurality of devices 11, 12, 13. For example, the device 11 is a computer and is connected to the home gateway 10 by means of a wireless connection established according to IEEE 802.11, or Wi-Fi.

The devices 12 and 13 are Bluetooth capable devices, like a loud-speaker or a heat-sensor for example. The devices 12 and 13 are paired to the home gateway. The devices 12 and 13 are part of an *ad hoc* network comprising Bluetooth capable devices. The devices 12 and 13 may directly communicate with the computer 11 if the computer 11 is Bluetooth capable. That is to say data may be exchange directly between the computer 11 and the devices 12 and 13 without involving the home gateway 10 as opposed to Wi-Fi communications in which data exchanged between two Wi-Fi capable devices must pass through the access point, e.g. the home gateway 10.

A user equipment 14 is located outside of the LAN and may communicate with the home gateway 10 through the WAN. The user equipment 14 is a Bluetooth capable device. The user equipment 14 is for example a smartphone, or a tablet, or laptop, etc.

When the user equipment 14 is located within the LAN, it can communicate directly with the devices 12 and 13 and exchange data and control messages using Bluetooth. More generally, the user equipment 14 can communicate directly with the devices 12 and 13 and exchange data and control messages using Bluetooth when the user equipment 14 and the devices 12 and 13 are within range with each other.

It is no longer possible when the user equipment 14 is out of range as represented on figure 1.

**Figure 2** represents a network equipment, such as the home gateway 10 according to an embodiment of the invention.

The home gateway 10 may comprise a processor 101, a storage unit 102, an input device 103, a display device 104, and an interface unit 105 which are connected by a bus 106. Of course, constituent elements of the home gateway 10 may be connected by a connection other than a bus connection.

The processor 101 controls operations of the gateway 10. The storage unit 102 stores at least one program capable of controlling low range wireless devices such as devices 12 and 13, to be executed by the processor 101, and various data, parameters used by computations performed by the processor 101, intermediate data of computations performed by the processor 101, and so on. The processor 101 may be formed by any known and suitable hardware, or software, or a combination of hardware and software. For example, the processor 101 may be formed by dedicated hardware such as a processing circuit, or by a programmable processing unit such as a CPU (*Central Processing Unit*) that executes a program stored in a memory thereof.

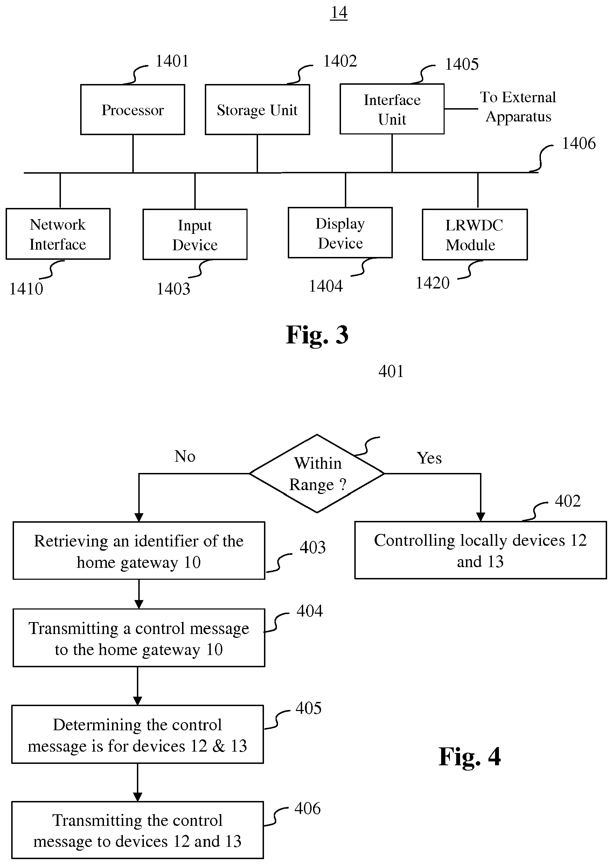

The storage unit 102 may be formed by any suitable storage or means capable of storing the program, data, or the like in a computer-readable manner. Examples of the storage unit 102 include non-transitory computer-readable storage media such as semiconductor memory devices, and magnetic, optical, or magneto-optical recording media loaded into a read and write unit. The program causes the processor 101 to perform a process for controlling the low range wireless devices 12 and 13 according to an embodiment of the present disclosure as described hereinafter with reference to figure 4.

The input device 103 may be formed by a keyboard, a pointing device such as a mouse, or the like for use by the user to input commands, to make user's selections of parameters used for selecting the transmission interface to be used. The output device 104 may be formed by a display device to display, for example, a Graphical User Interface (GUI. The input device 103 and the output device 104 may be formed integrally by a touchscreen panel, for example.

The interface unit 105 provides an interface between the home gateway 10 and an external apparatus. The interface unit 105 may be communicable with the external apparatus via cable or wireless communication. In an embodiment, the external apparatus may be an optical acquisition system such as an actual camera.

A low range wireless device controlling (LRWDC) module 120, and a network interface 110, for connecting with the WAN, are also connected to the bus 106.

In an embodiment of the invention, the low range wireless device controlling module 120 is a proxy Bluetooth server.

**Figure 3** represents a user equipment 14 according to an embodiment of the invention.

The user equipment 14 may comprise a processor 1401, a storage unit 1402, an input device 1403, a display device 1404, and an interface unit 1405 which are connected by a bus 1406. Of course, constituent elements of the user equipment may be connected by a connection other than a bus connection.

The processor 1401 controls operations of the user equipment 14. The storage unit 1402 stores at least one program capable of controlling low range wireless devices such as devices 12 and 13, to be executed by the processor 1401, and various data, parameters used by computations performed by the processor 1401, intermediate data of computations performed by the processor 1401, and so on. The processor 1401 may be formed by any known and suitable hardware, or software, or a combination of hardware and software. For example, the processor 1401 may be formed by dedicated hardware such as a processing circuit, or by a programmable processing unit such as a CPU (*Central Professing Unit*) that executes a program stored in a memory thereof.

The storage unit 1402 may be formed by any suitable storage or means capable of storing the program, data, or the like in a computer-readable manner. Examples of the storage unit 1402 include non-transitory computer-readable storage media such as semiconductor memory devices, and magnetic, optical, or magneto-optical recording media loaded into a read and write unit. The program causes the processor 1401 to perform a process for controlling the low range wireless devices 12 and 13 according to an embodiment of the present disclosure as described hereinafter with reference to figure 4.

The input device 1403 may be formed by a keyboard, a pointing device such as a mouse, or the like for use by the user to input commands, to make user's selections of parameters used for selecting the transmission interface to be used. The output device 1404 may be formed by a display device to display, for example, a Graphical User Interface (GUI. The input device 1403 and the output device 1404 may be formed integrally by a touchscreen panel, for example.

The interface unit 1405 provides an interface between the user equipment 14 and an external apparatus. The interface unit 1405 may be communicable with the external apparatus via cable or wireless communication. In an embodiment, the external apparatus may be an optical acquisition system such as an actual camera.

A low range wireless device controlling (LRWDC) module 1420, and a network interface 1410, for connecting either with the WAN or directly with the home gateway 10 when the user equipment is located in the LAN, are also connected to the bus 1406.

In an embodiment of the invention, the low range wireless device controlling module 1420 embeds a Bluetooth client according to an embodiment of the invention.

Bluetooth is defined as a layer protocol architecture. Among those protocol stacks are the L2CAP (*Logical Link Control and Adaptation Protocol*) layer, the HCI (*host- Controller interface*) layer and the BR/EDR (*BR*/*Enhanced Data Rate*) controller-LE (*Low Energy*) controller stack. All those protocol stacks are defined in the different specifications released by the Bluetooth Special Interest Group.

The program capable of controlling low range wireless devices according to an embodiment of the invention is embedded between the L2CAP stack and the HCI stack of the low range wireless device controlling module 120 and of the low range wireless device controlling module 1420.

**Figure 4** is a flow chart for explaining a process for remotely controlling a low range wireless device according to an embodiment of the invention.

Such a process enables a user to remotely control low range wireless devices when he or she is out of is home for example.

Thus, in a step 401, the processor 1401 of the user equipment determines 14 if the user equipment 14 is located within range of the devices 12 and 13 or not. For example, the user equipment 14 is within range of devices 12 and 13 if during a discovery phase it detects the device 12 and 13.

If the user equipment 14 is located within range of the devices 12 and 13, e.g. it is located in the LAN, then the user equipment 14 can control devices 12 and 13 directly via a standard Bluetooth communication in a step 402.

If the user equipment 14 is out of range of devices 12 and 13, then the processor 1401 of the user equipment 14 retrieves an identifier of the home gateway 10 in a step 403. Such an identifier is for example a public IP address of the home gateway 10 or a host name.

In an embodiment of the invention, the host name associated to the home gateway 10 is for example stored in storage unit 1402 of the user equipment 14. The host name is then translated via a DNS server into a public IP address.

In another embodiment of the invention, the user equipment 14 sends requests to a remote server in order to retrieve the public IP address of the home gateway 10.

In a step 404, the processor 1401 of the user equipment 14 transmits to the home gateway 10, through the WAN, a control message intended for the devices 12 and 13.

Steps 401 to 404 are executed by the low range wireless device controlling module 1420.

In a step 405, the home gateway 10 receives the control message sent by the user equipment to the devices 12 and 13. Such a control message is received through the network interface 110 of the home gateway 10.

The processor 101 of the home gateway 10 determines that the control message is intended of the low range wireless device controlling module 120 because of a port forwarding rule setting up the firewall of the home gateway 10 and authorising incoming control messages from the WAN to access the low range wireless device controlling module 120.

In a step 406, the low range wireless device controlling module 120 processes the received control messages and establish a direct communication with devices 12 and 13 during which the data transmitted by the user equipment 14 in the control message are transmitted to the devices 12 and 13.

From the devices 12 and 13 everything goes as if the user equipment 14 was in the LAN. Devices 12 and 13 are thus remotely controlled by the user equipment 14 using a low range technology such as Bluetooth.

In another embodiment of the invention, the user equipment 14 sends a request to a server, located for example in a network of a service provider, in which the public IP addresses of a plurality of home gateways and hot spots are stored. In answer to this request, the user equipment receives a message comprising the public IP address of the home gateway 10.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A computer implemented method for controlling a low range wireless device by means of a user equipment, said method being executed by the user equipment and comprising:
- determining the low range wireless device is out of range of the user equipment,
- transmitting a control message intended for the low range wireless device to a network equipment, within the range of which the low range wireless device is located, said network equipment being configured to transmit said controlling message to the low range wireless device.

2. The method according to claim 1, further comprising, prior to transmitting the control message, retrieving an identifier of the network equipment stored in a memory of said user equipment.

3. The method according to claim 1, further comprising, prior to transmitting the control message, receiving, in answer to a request, a message comprising an identifier of the network equipment, said message being transmitted by a remote server.

4. A user equipment capable of controlling a low range wireless device, said user equipment comprising a processor configured to:
- determine the low range wireless device is out of range of the user equipment,
- transmit a control message intended for the low range wireless device to a network equipment, within the range of which the low range wireless device is located, said network equipment being configured to transmit said controlling message to the low range wireless device.

5. The user equipment according to claim 4, wherein prior to transmitting the control message, the processor is configured to retrieve an identifier of the network equipment stored in a memory of said user equipment.

6. The user equipment according to claim 4, wherein prior to transmitting the control message, the processor is configured to receive, in answer to a request, a message comprising an identifier of the network equipment, said message being transmitted by a remote server.

7. A network equipment capable of controlling a low range wireless device located within range of said network equipment, said network equipment comprising a processor configured to:
- receive a control message transmitted by a user equipment which is out of range of the low range wireless device,
- transmit said control message to the low range wireless device.

8. A system for controlling at least one low range wireless device, said system comprising:
- a user equipment capable of controlling said low range wireless device,
- a network equipment within the range of which the low range wireless device is located,
wherein:
- the user equipment:
• determines the low range wireless device is out of its range,
• transmits a control message intended for the low range wireless device to said network equipment, and
- the network equipment:
• receives said control message transmitted by said user equipment,
• transmits said control message to the low range wireless device.

9. A computer program **characterized in that** it comprises program code instructions for the implementation of the method according to any of claims 1 to 3 when the program is executed by a processor.
